# EUROPÄISCHE PATENTANMELDUNG

(11) **EP 2 628 969 A2**
(43) Veröffentlichungstag der Anmeldung: **21.08.2013**
(21) Anmeldenummer: 13155336.4
(22) Anmeldetag: 15.02.2013
(51) Int. Cl.: F16C 35/077, F16C 19/54, F16C 27/04

(54) **Lageranordnung**

(30) Priorität: 15.02.2012 DE 102012202265
(71) Anmelder: Aktiebolaget SKF, 41550 Göteborg (SE)
(72) Erfinder: Schweitzer, Ferdinand, 3352 St. Peter in der Au (AT)
(74) Vertreter: Schonecke, Mitja

(57) **Zusammenfassung**

Die Erfindung betrifft eine Lageranordnung (1) zur Lagerung eines ersten Bauteils (2) relativ zu einem zweiten Bauteil (3), umfassend ein erstes Wälzlager (4) zur Aufnahme radialer Lasten und ein zweites Wälzlager (5) mit mindestens einem Außenring (6) und mindestens einem Innenring (7) zur Aufnahme axialer Lasten, wobei die beiden Wälzlager (4, 5) unmittelbar oder mittelbar aneinander angrenzend angeordnet sind, wobei zwischen mindestens einem der Lagerringe (6, 7) des zweiten Wälzlagers (5) und dem ersten Bauteil (2) und/oder dem zweiten Bauteil (3) ein in radiale Richtung (R) wirksames Federelement (8) angeordnet ist. Um den Montageaufwand zu vermindern und ein verbessertes Laufverhalten zu erzielen, sieht die Erfindung vor, dass das Federelement (8) durch ein zu einem Ring geformten Band gebildet wird, wobei in die Oberfläche des Bandes eine Anzahl kugelschalenförmige Erhebungen (10) eingeformt ist.

## Beschreibung

Die Erfindung betrifft eine Lageranordnung zur Lagerung eines ersten Bauteils relativ zu einem zweiten Bauteil, umfassend ein erstes Wälzlager zur Aufnahme radialer Lasten und ein zweites Wälzlager mit mindestens einem Außenring und mindestens einem Innenring zur Aufnahme axialer Lasten, wobei die beiden Wälzlager unmittelbar oder mittelbar aneinander angrenzend angeordnet sind, wobei zwischen mindestens einem der Lagerringe des zweiten Wälzlagers und dem ersten Bauteil und/oder dem zweiten Bauteil ein in radiale Richtung wirksames Federelement angeordnet ist.

In verschiedenen Lageranwendungen ist es von Vorteil, die radiale und die axiale Lagerung voneinander zu entkoppeln. Demgemäß wird beispielsweise eine Welle in einem Gehäuse an einem ihrer Enden mittels zweier Lager gelagert, nämlich mittels eines Radiallagers und eines Axiallagers; am anderen Ende ist dann zumeist wegen der statischen Bestimmtheit der Lagerung nur ein Radiallager vorgesehen.

Abhängig vom verwendeten Lagertyp für die Axiallager ergeben sich dabei mehr oder weniger gute Möglichkeiten, auch radiale Kraftanteile über das Axiallager zu leiten. In manchen Anwendungen ist es sehr schädlich, wenn das vorgesehene Axiallager auch radiale Kraftkomponenten übertragen muss. Beispielsweise seien hier Vierpunktlager genannt, die in machen Anwendungen nur dann gut und dauerhaft arbeiten, wenn sie reine Axialkraftanteile übertragen.

Demgemäß ist es insbesondere dann, wenn beispielsweise ein Zylinderrollenlager für die Radialkraftübertragung und ein Vierpunktlager für die Axialkraftübertragung miteinander in einer Lagerstelle kombiniert werden, erforderlich, das Vierpunktlager präzise radial auszurichten ("einzudrehen"), um zu vermeiden, dass es auch Radialkraftanteile überträgt.

Der Montageaufwand ist hierfür erheblich und die Montagekosten entsprechend hoch.

Eine Lageranordnung der eingangs genannten Art ist aus der DE 10 78 382 A bekannt. Ähnliche Lösungen zeigen die GB 848 536 A und die AT 174 257 B. Aus der DE 851 865 B ist es bekannt, einen plastisch verformbaren Ring zwischen Lageraußenring und Gehäusebohrung einzulegen, um radiales Spiel in einer Friktionsverbindung zu kompensieren.

Der Erfindung liegt die **Aufgabe** zugrunde, eine gattungsgemäße Lageranordnung zu schaffen, mit der es möglich ist, in einfacherer und damit kostengünstigerer Weise als bislang die Montage der Lageranordnung zu bewerkstelligen, wobei dafür Sorge getragen werden soll, dass das Axiallager im wesentlichen frei von der Beaufschlagung mit radialen Lagerkräften bleibt.

Die **Lösung** dieser Aufgabe durch die Erfindung ist dadurch gekennzeichnet, dass das Federelement durch ein zu einem Ring geformten Band gebildet wird, wobei in die Oberfläche des Bandes eine Anzahl kugelschalenförmige Erhebungen eingeformt ist.

Dabei ist bevorzugt nur ein einziges Federelement pro Lageranordnung vorhanden.

Das Federelement ist bevorzugt zwischen dem Außenring und einem der Bauteile angeordnet.

Das erste Wälzlager ist bevorzugt ein Zylinderrollenlager, das zweite Wälzlager ein Vierpunktlager.

Das Federelement kann dabei bevorzugt über den Umfang zwischen 8 und 32 Erhebungen aufweisen.

Das Federelement erstreckt sich vorzugsweise über die gesamte Breite des Lagerrings.

Es kann an einer Umfangsstelle einen Schlitz aufweisen. Schließlich hat es bevorzugt eine radiale Dicke, die zwischen 0,3 mm und 5,0 mm liegt.

Die vorgeschlagene Konzeption erlaubt es, dass bei der Montage der Lageranordnung auf ein präzises radiales Einrichten ("vertikales Eindrehen") des Axiallagers verzichtet werden kann. Der Montagevorgang vereinfacht sich entsprechend. Es kann in diesem Zusammenhang auch auf mitunter aufwändige Manipulationsgeräte verzichtet werden, die für die Montage ansonsten nötig sind.

Wie sich aus der Ausgestaltung des Federelements ergibt, dient dieses quasi als ein Art Montagehülse, die beim Zentrieren des Axiallagers, insbesondere des Vierpunktlagers, hilft. Die Zentrierung erfolgt, indem die elastischen Abschnitte des Federelements einerseits so steif sind, dass sie das Axiallager bei der Montage halten und zentrieren, d. h. dessen Gewicht zu halten; andererseits ist das Federelement so elastisch und nachgiebig, dass das Axiallager bei größeren radialen Kräften (parasitären Kräften) nachgibt. So wird sichergestellt, dass zum einen das Axiallager keine radialen Kräfte überträgt und zum anderen das nebengeordnete Radiallager alle radialen Kräfte aufnimmt.

Der Einsatz eines in Umfangsrichtung wellenförmig ausgestalteten Federelements hat sich bewährt. Aber auch eine alternative Lösung ist von Vorteil: Das Federelement kann als Ring aus einem flachen Blechmaterial ausgebildet sein und in Umfangsrichtung mit mehreren Kugelschalen-Abschnitten versehen sein, d. h. mit kugelkalottenförmig ausgebildeten Abschnitten, die in das Material des Federelements eingeformt sind.

Bei der Montage des Axiallagers erfolgt die Zentrierung durch die genannten kugelschalenförmigen Erhebungen. Im Falle von radialer Überlast, d. h. beim Vorliegen parasitärer Radialkräfte im Betrieb, können die kugelschalenförmigen Abschnitte durchschlagen bzw. durchschnappen, so dass die Übertragung radialen Kräfte vom Axiallageraußenring ins Gehäuse unterbunden ist.

Vorteilhaft ist auch ein weiterbildungsgemäßer Aspekt, wonach das als Montagehilfe fungierende Federelement um die halbe radiale Lagerluft des Radiallagers exzentrisch gestaltet werden kann. Das dann mit definierter Orientierung zwischen Lageraußenring des Axiallagers und Gehäuse eingebaute Federelement erlaubt so ein präzise Ausrichtung des Axiallagers, insbesondere des Vierpunktlagers. Somit ist die Wirkung des Axiallagers als reine axiale Lagerstelle gewährleistet.

In vorteilhafter Weise fungiert die vorgeschlagene Konzeption auch unter dem Gesichtspunkt einer Überlastsicherung.

Durch die vorgeschlagene Ausgestaltung fungiert das genannte Federelement als Hilfswerkzeug bzw. als Montagehilfe für die gattungsgemäße Lageranordnung, so dass eine Trennung der Lager für die radiale Lasten (bevorzugt Zylinderrollenlager) und die axiale Lasten (bevorzugt Vierpunktlager) gegeben ist. Die parasitären radialen Kräfte auf das Axiallager werden minimiert.

Demgemäß können insbesondere Vierpunktlager als Axiallager verbessert eingesetzt werden. Ohne die genannten Maßnahmen werden immer wieder Schäden am Axiallager infolge schädlicher Radiallasten beobachtet, da ein Vierpunktlager grundsätzlich für die Radiallastübertragung wenig geeignet ist.

Der Montagevorgang wird wesentlich erleichtert, da auf das aufwändige "vertikale Eindrehen" verzichtet werden kann. Ein weiterer Montagevorteil kann erzielt werden, weil die radiale Lagerluft des Radiallagers (Zylinderrollenlagers) mit dem vorgeschlagenen Federelement kompensiert werden kann.

In der Zeichnung sind Ausführungsbeispiele dargestellt. Es zeigen:
- Fig. 1: einen Radialschnitt durch eine Lageranordnung gemäß dem Stand der Technik, die ein Zylinderrollenlager und ein Vierpunktlager aufweist, um radiale bzw. axiale Kräfte zwischen einer Welle und einem Gehäuse übertragen zu können,
- Fig. 2: einen Ausschnitt des Gehäuses, des Lageraußenrings des Vierpunktlagers sowie eines Federelements im Schnitt A-B gemäß Fig. 1,
- Fig. 3: in perspektivischer Darstellung einen Abschnitt des Federelements gemäß einer erfindungsgemäßen Ausgestaltung und
- Fig. 4: das Federelement nach Fig. 3 in einem Schnitt analog dem Schnitt A-B gemäß Fig. 1.

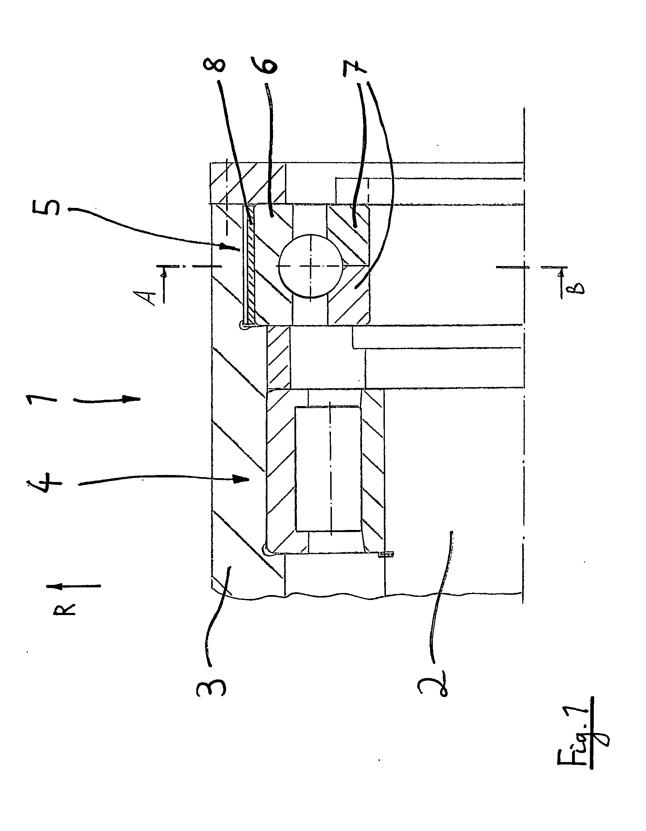

In Fig. 1 ist eine Lageranordnung 1 skizziert, mit der ein rotierendes erstes Bauteil 2 in Form einer Welle in einem zweiten ortsfesten Bauteil 3 in Form eines Gehäuses gelagert wird. Die Lageranordnung 1 hat sowohl eine radiale als auch eine axiale Lagerfunktion, d. h. es handelt sich um ein Festlager.

Die Lageranordnung 1 weist hierfür ein erstes Wälzlager 4 in Form eines Zylinderrollenlagers auf, das keine axialen Kräfte übertragen kann. Dann weist die Lageranordnung 1 des weiteren ein zweites Wälzlager 5 in Form eines Vierpunktlagers auf. Dieses hat zwei zusammenwirkende Innenringe 7 und einen Außenring 6.

Wesentlich ist, dass zwischen einem der Ringe des Axiallagers und dem Gehäuse bzw. der Welle ein Federelement 8 angeordnet ist, das eine Federwirkung in radiale Richtung R aufweist. Konkret ist vorliegend das Federelement 8 zwischen dem Außenring 6 des Vierpunktlagers 5 und dem Gehäuse 3 positioniert.

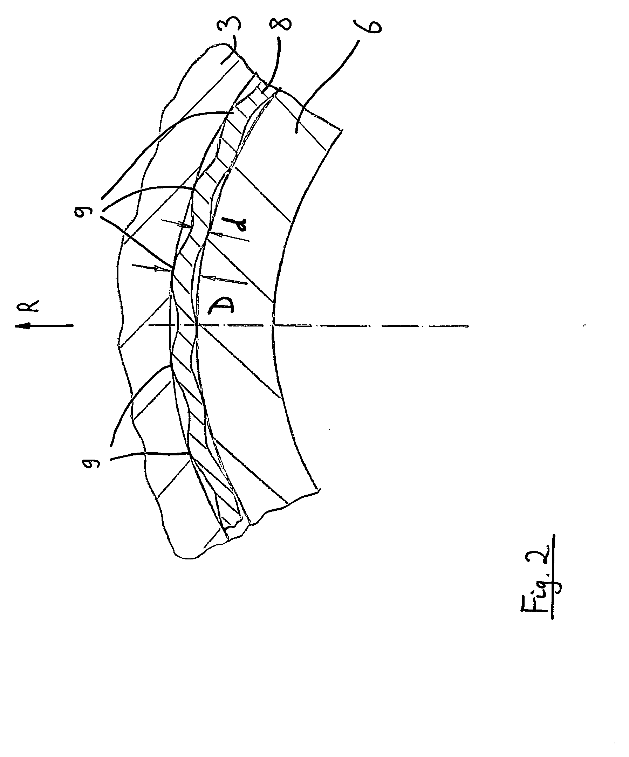

Details zu diesem Federelement 8 sind aus Fig. 2 ersichtlich. Hier ist ein Teil des Schnitts A-B gemäß Fig. 1, also ein Stirnschnitt bzw. Axialschnitt, dargestellt. Wie gesehen werden kann, besteht das Federelement 8 aus einem ringförmigen Element, das sich (s. Fig. 1) im wesentlichen über die gesamte Breite des Außenrings 6 erstreckt. Das Federelement 8 ist - wie in Fig. 2 gesehen werden kann - wellenförmig ausgebildet, d. h. es weist über den Umfang eine Anzahl wellenförmiger Erhebungen 9 auf.

Demgemäß füllt das Federelement 8 zwar den radialen Raum mit der Dicke D zwischen dem Außenring 6 und dem Gehäuse 3 aus, allerdings liegen hierbei nur die wellenförmigen Erhebungen 9 mit ihrer radial äußeren Seite an der Gehäusebohrung an, während das Federelement selber mit seinen korrespondierenden "Wellentälern" am Außenring 6 anliegt. Das Federelement 8 ist dabei aus einem Blech mit einer Dicke d hergestellt.

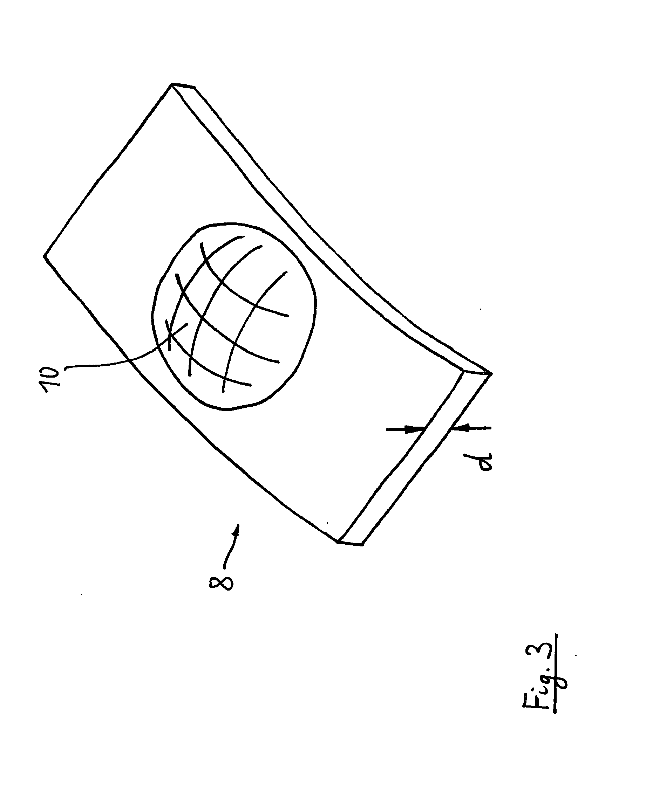

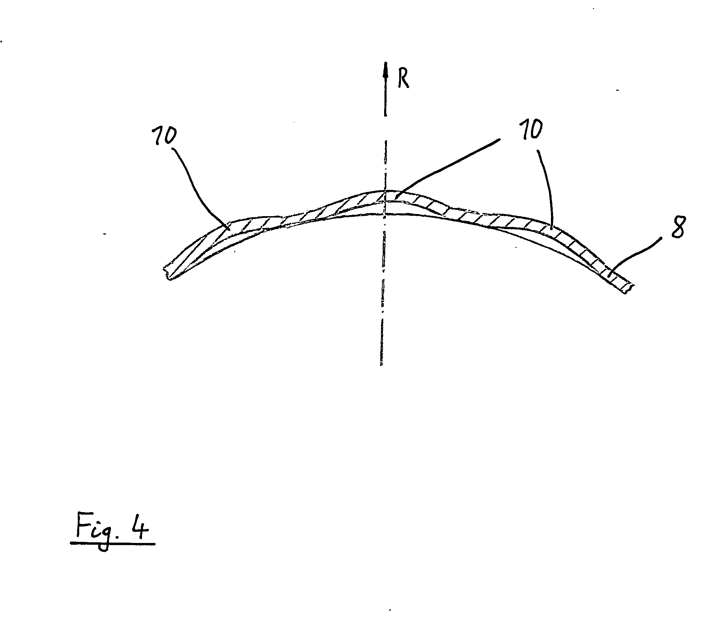

In den Figuren 3 und 4 ist hierzu eine erfindungsgemäße Lösung dargestellt. Das Federelement 8 besteht hier gleichermaßen aus einem ringförmigen Band. Statt einer wellenförmigen Struktur sind nunmehr allerdings kugelschalenförmige Erhebungen 10 in das Material des Federelements 8 eingebracht. Durch elastisches Einfedern der Erhebungen 10 ergibt sich die gewünschte Federwirkung des Elements 8.

Demgemäß ist der Lageraußenring 6 des Vierpunktlagers 5 in radiale Richtung R elastisch im Gehäuse 3 gelagert, so dass parasitäre Radialkräfte im Vierpunktlager nicht entstehen können bzw. stark vermindert sind.

### Bezugszeichenliste

| | |
|---|---|
| 1 | Lageranordnung |
| 2 | erstes Bauteil (Welle) |
| 3 | zweites Bauteil (Gehäuse) |
| 4 | erstes Wälzlager (Zylinderrollenlager) |
| 5 | zweites Wälzlager (Vierpunktlager) |
| 6 | Außenring |
| 7 | Innenring |
| 8 | Federelement |
| 9 | wellenförmige Erhebung |
| 10 | kugelschalenförmige Erhebung |
| | |
| R | radiale Richtung |
| D | radiale Dicke des Aufnahmeraums |
| d | radiale Dicke |

## Patentansprüche

1. Lageranordnung (1) zur Lagerung eines ersten Bauteils (2) relativ zu einem zweiten Bauteil (3), umfassend ein erstes Wälzlager (4) zur Aufnahme radialer Lasten und ein zweites Wälzlager (5) mit mindestens einem Außenring (6) und mindestens einem Innenring (7) zur Aufnahme axialer Lasten, wobei die beiden Wälzlager (4, 5) unmittelbar oder mittelbar aneinander angrenzend angeordnet sind, wobei zwischen mindestens einem der Lagerringe (6, 7) des zweiten Wälzlagers (5) und dem ersten Bauteil (2) und/oder dem zweiten Bauteil (3) ein in radiale Richtung (R) wirksames Federelement (8) angeordnet ist,
**dadurch gekennzeichnet, dass**
das Federelement (8) durch ein zu einem Ring geformten Band gebildet wird, wobei in die Oberfläche des Bandes eine Anzahl kugelschalenförmige Erhebungen (10) eingeformt ist.

2. Lageranordnung nach Anspruch 1, **dadurch gekennzeichnet, dass** ein einziges Federelement (8) vorhanden ist.

3. Lageranordnung nach Anspruch 2, **dadurch gekennzeichnet, dass** das Federelement (8) zwischen dem Außenring (6) und einem der Bauteile (2, 3) angeordnet ist.

4. Lageranordnung nach einem der Ansprüche 1 bis 3, **dadurch gekennzeichnet, dass** das erste Wälzlager (4) ein Zylinderrollenlager ist und dass das zweite Wälzlager (5) ein Vierpunktlager ist.

5. Lageranordnung nach einem der Ansprüche 1 bis 4, **dadurch gekennzeichnet, dass** das Federelement (8) über den Umfang zwischen 8 und 32 Erhebungen (10) aufweist.

6. Lageranordnung nach einem der Ansprüche 1 bis 5, **dadurch gekennzeichnet, dass** sich das Federelement (8) über die gesamte Breite des Lagerrings (6, 7) erstreckt.

7. Lageranordnung nach einem der Ansprüche 1 bis 6, **dadurch gekennzeichnet, dass** das Federelement (8) an einer Umfangsstelle einen Schlitz aufweist.

8. Lageranordnung nach einem der Ansprüche 1 bis 7, **dadurch gekennzeichnet, dass** das Federelement (8) eine radiale Dicke (d) aufweist, die zwischen 0,3 mm und 5,0 mm liegt.
